# EUROPÄISCHE PATENTSCHRIFT

(11) **EP 3 046 966 B1**
(45) Veröffentlichungstag und Bekanntmachung des Hinweises auf die Patenterteilung: **24.10.2018**
(21) Anmeldenummer: 14766737.2
(22) Anmeldetag: 18.09.2014
(51) Int. Cl.: C08L 83/04

(54) **KOMBINATION AUS RTV-1 SILIKONFORMULIERUNG UND BESCHLEUNIGER MIT VERBESSERTER AUSHÄRTECHARAKTERISTIK**
COMBINATION OF RTV-1 SILICONE FORMULATION AND ACCELERATOR HAVING IMPROVED CURING CHARACTERISTICS
COMBINAISON D'UNE FORMULE DE SILICONE RTV-1 ET ACCÉLÉRATEUR DOTÉ D'UNE CARACTÉRISTIQUE DE DURCISSEMENT AMÉLIORÉE

(30) Priorität: 20.09.2013 EP 13185434
(43) Veröffentlichungstag der Anmeldung: 27.07.2016
(73) Patentinhaber: Sika Technology AG, 6340 Baar (CH)
(72) Erfinder: FRIEDEL, Manuel, CH-8048 Zürich (CH); SAVOY, André, CH-8964 Rudolfstetten (CH); MÜLLER, Andrea, CH-6504 Hendschiken (CH)
(74) Vertreter: Sika Patent Attorneys
(86) Internationale Anmeldenummer: PCT/EP2014/069891
(87) Internationale Veröffentlichungsnummer: WO 2015/040111

(56) Entgegenhaltungen:
- EP-A2- 1 865 029
- US-A1- 2012 065 308
- US-A1- 2013 102 720

## Beschreibung

### Technisches Gebiet

Die Erfindung betrifft eine zweikomponentige Zusammensetzung aus einer einkomponentigen feuchtigkeitshärtenden Silikonzusammensetzung und einem Beschleuniger, ein Verfahren zum Verkleben oder Verfugen mit der Zusammensetzung und deren Verwendung.

### Stand der Technik

Silikone sind bekannte Zusammensetzungen, welche schon lange als Kleb- oder Dichtstoffe eingesetzt werden. Solche Silikone können als ein- oder zweikomponentige Silikonformulierungen gestaltet werden und enthalten als Hauptkomponenten ein Polyorganosiloxan und einen Vernetzer. Es wird zwischen kaltvernetzenden RTV-Silikonen (RTV = raumtemperaturvernetzend bzw. -vulkanisierend) und warmvernetzenden HTV-Silikonen (HTV = hochtemperaturvernetzend bzw. -vulkanisierend) unterschieden. Ein- und zweikomponentige RTV-Silikone werden auch als RTV 1-Silikone bzw. RTV 2-Silikone bezeichnet.

RTV-1 Silikone sind lange bekannt. Ebenfalls bekannt ist, dass solche Formulierungen auf Basis sogenannter neutraler Vernetzung aushärten können. Klassischerweise setzten neutral vernetzende Systeme Oximverbindungen frei, deren Geruch als sehr unangenehm empfunden wird. Alternativ können RTV-1 Silikone mit Alkoxygruppen-haltigen Vernetzern formuliert werden. Spaltprodukte der Vernetzung sind dann Alkohole, deren Geruch deutlich weniger unangenehm ist. Im Allgemeinen werden als Vernetzer monomere Silane verwendet.

Weiter ist bekannt, dass die Aushärtung von RTV-1 Silikonen durch Zugabe von Wasser beschleunigt werden kann. Allerdings ist dies nur für die beschriebenen Systeme, die Oxime freisetzen, ohne weiteres möglich.

EP-A1-2202276 beschreibt eine 2-komponentige Silikonformulierung, wobei eine der Komponenten Wasser in dispergierter Form enthält. Diese Silikonformulierungen benötigen in den konkreten Ausführungsformen oxim-haltige Vernetzer, die bei der Aushärtung schlecht riechende Oxime freisetzen.

DE-T2-60102746 beschreibt Silikonzusammensetzungen auf Basis von OHterminierten Polydiorganosiloxanen, die gefällte Kieselsäure enthalten. Die gefällte Kieselsäure dient als Wasserlieferant, um die Aushärtereaktion zu beschleunigen. Nachteil der Offenbarung ist, dass diese Formulierungen als RTV-2, also 2-komponentige Systeme, formuliert werden müssen.

EP 1865029 A2 betrifft vernetzbare Massen auf Basis von Organosiliciumverbindungen wie Polydimethylsiloxanen, die feinteiliges Metacarbonat und gegebenenfalls einen Vernetzer und einen Härtungsbeschleuniger enthalten. Der Vernetzer kann ein monomeres Silan oder ein Teilhydrolysat davon sein. Zur Vernetzung der Masse kann Wasser zugesetzt werden.

US 2013/102720 A1 beschreibt eine Zusammensetzung, die in Anwesenheit von Wasser zu einem Elastomer vernetzbar ist und ein Polyorganosiloxan, ein Siloxan aus 2 bis 10 Siloxyleinheiten und gegebenenfalls einen Kondensationskatalysator umfasst.

US 2012/065308 A1 betrifft vernetzbare Polymerzusammensetzungen, die ein silylhaltiges Polymer wie ein Polysiloxan, einen Vernetzer, einen organometallischen Katalysator und eine saure Verbindung enthalten. In einer Ausführungsform kann der Vernetzer ein monomeres Silan oder ein Kondensationsprodukt davon mit einem Kondensationsgrad von 2 bis 10 sein.

### Darstellung der Erfindung

Aufgabe der vorliegenden Erfindung ist es daher, die Bereitstellung einer einkomponentigen feuchtigkeitshärtenden Silikonformulierung, die oximfrei formuliert werden kann, nur unter Freisetzung von Alkoholen aushärtet und deren Aushärtereaktion durch die Zugabe von Wasser beschleunigt werden kann.

Es wurde überraschenderweise festgestellt, dass auch bei oximfreien Silikonformulierungen eine Beschleunigung der Aushärtungsreaktion durch Zugabe von Wasser bewirkt werden kann, wenn als Vernetzer spezielle Alkoxygruppen enthaltende Siloxane verwendet werden.

Demgemäß betrifft die Erfindung eine zweikomponentige Zusammensetzung, umfassend als Komponente A) eine einkomponentige feuchtigkeitshärtende Silikonzusammensetzung umfassend
a) mindestens ein vernetzbares Polydiorganosiloxan,
b) mindestens ein Alkoxygruppen enthaltendes Siloxan als Vernetzer, erhältlich aus der teilweisen Hydrolyse und Kondensation von einem oder mehreren Alkoxysilanen, wobei mindestens ein Alkoxysilan ein Trialkoxysilan oder ein Tetraalkoxysilan ist, wobei der mittlere Kondensationsgrad des Alkoxygruppen enthaltenden Siloxans mindestens 5 ist, und
c) mindestens einen Kondensationskatalysator,
und als Komponente B) einen Beschleuniger umfassend Wasser.

Mit der erfindungsgemäßen Zusammensetzung ist durch Vermischen der beiden Komponenten eine Beschleunigung der Aushärtung möglich, wobei auf die sonst als Vernetzer üblichen organofunktionellen Ketoximosilane verzichtet werden kann. Im Folgenden wird die Erfindung ausführlich erläutert.

### Weg zur Ausführung der Erfindung

Die hier angegebenen Viskositäten können gemäß DIN 53018 bestimmt werden. Die Messung kann mittels Kegel-Platte-Viskosimeter MCR101 der Firma Anton-Paar, Österreich, mit Kegel-Typ CP 25-1 bei 23°C erfolgen. Die angegebenen Viskositätswerte beziehen sich auf eine Scherrate von 0,5 s⁻¹.

Ein Alkoxysilan ist ein monomeres Silan mit mindestens einer Alkoxygruppe, die am Si-Atom gebunden ist. Ein Trialkoxysilan und ein Tetraalkoxysilan sind ein monomeres Silan mit drei bzw. vier Alkoxygruppen, die an dem Si-Atom gebunden sind. Die Alkoxygruppe kann z.B. eine C₁-C₆-Alkoxygruppe sein.

Die zweikomponentige Zusammensetzung besteht aus einer Komponente A) und einer Komponente B) als Beschleuniger, die Wasser umfasst. Die Zusammensetzung umfasst als Komponente A) eine einkomponentige feuchtigkeitshärtende Silikonzusammensetzung, insbesondere ein RTV-1 Silikon. Bei solchen RTV-1 Silikonen erfolgt die Aushärtung durch Kontakt mit Wasser, im Allgemeinen durch Kontakt mit der Luftfeuchtigkeit in der Luft. Die Komponenten A) und B) liegen gesondert vor. Durch Vermischung der Komponenten, üblicherweise kurz vor der Verarbeitung, wird die Aushärtung der Komponente A) beschleunigt.

Die Komponente A) umfasst ein oder mehrere vernetzbare Polydiorganosiloxane. Solche vernetzbaren Polydiorganosiloxane sind dem Fachmann gut bekannt. Die vernetzbaren Polydiorganosiloxane weisen funktionelle Gruppen, insbesondere zwei oder mehr funktionelle Gruppen auf, über die eine Vernetzung möglich ist. Diese funktionellen Gruppen können in einer Seitengruppe oder einer Endgruppe des Polydiorganosiloxans vorliegen, wobei endständige funktionelle Gruppen bevorzugt sind. Solche Polydiorganosiloxane mit endständigen funktionellen Gruppen werden auch als α,ω-funktionelle Polydiorganosiloxane bezeichnet.

Unter funktionellen Gruppen werden hier Gruppen verstanden, die mit den Alkoxygruppen des Vernetzers unter Bildung einer Bindung reagieren können. Bevorzugt erfolgt die Reaktion zwischen der funktionellen Gruppe des Polydiorganosiloxans und der funktionellen Gruppe des Vernetzers durch eine Kondensationsreaktion. Dabei werden in der Regel Nebenprodukte wie Wasser oder Alkohol freigesetzt.

Als funktionelle Gruppen eignen sich alle, die üblicherweise in der Technik eingesetzt werden. Bevorzugte Beispiele für solche funktionellen Gruppen des Polydiorganosiloxans sind Hydroxygruppen und maskierte Hydroxygruppen, insbesondere maskierte Hydroxygruppen, die an einem Si-Atom gebunden sind, wobei es sich bevorzugt um endständige Gruppen handelt. Maskierte Hydroxygruppen sind Hydroxygruppen, die im Härtungsprozess, z.B. unter Abspaltung einer Schutzgruppe, gewöhnlich durch Hydrolyse, freigesetzt werden.

Beispiele für maskierte Hydroxygruppen sind Alkoxygruppen und Acetoxygruppen. Das vernetzbare Polydiorganosiloxan weist bevorzugt maskierte Hydroxygruppen, insbesondere Alkoxygruppen, auf. Beispiele für die funktionellen Gruppen sind die nachstehend für die Formel (I) aufgeführten Beispiele für den Rest R⁴. Das Polydiorganosiloxan weist z.B. an jedem Ende 1 bis 3, bevorzugt 1 oder 2, solcher funktioneller Gruppen auf.

Bei Einsatz von Hydroxy-terminierten Polydiorganosiloxanen ist die Compoundierung der Silikonformulierung häufig schwierig. Der Einsatz von Polydiorganosiloxanen mit maskierten Hydroxy-Endgruppen, wie Alkoxygruppen, vereinfacht die Compoundierung.

Prinzipiell kann es sich bei den funktionellen Gruppen des vernetzbaren Polydiorganosiloxans auch um an ein Si-Atom gebundene Oximgruppen, wie Ketoximogruppen, handeln. Bei diesen Ketoximogruppen handelt es sich ebenfalls um maskierte Hydroxygruppen. Das vernetzbare Polydiorganosiloxan weist aber bevorzugt keine Oximgruppe auf.

Die Viskosität der Polydiorganosiloxane kann in Abhängigkeit vom Einsatzzweck in breiten Bereichen variieren. Das erfindungsgemäß eingesetzte Polydiorganosiloxan kann bei einer Temperatur von 23 °C z.B. eine Viskosität von 10 bis 500000 mPa.s und bevorzugt von 5000 bis 400000 mPa.s aufweisen.

Das vernetzbare Polydiorganosiloxan ist bevorzugt ein lineares Polydiorganosiloxan, insbesondere ein Polydiorganosiloxan der Formel (I) 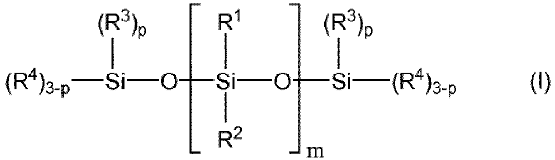 worin R¹, R² und R³ unabhängig voneinander lineare oder verzweigte, einwertige Kohlenwasserstoffreste mit 1 bis 12 C-Atomen sind, welche gegebenenfalls ein oder mehrere Heteroatome, und gegebenenfalls eine oder mehrere C-C-Mehrfachbindungen und/oder gegebenenfalls cycloaliphatische und/oder aromatische Anteile aufweisen,
R⁴ unabhängig voneinander eine Hydroxygruppe oder eine maskierte Hydroxygruppe, bevorzugt eine Alkoxygruppe oder Acetoxygruppe, ist, wobei R⁴ bevorzugt eine Alkoxygruppe ist,
der Index p für einen Wert von 0, 1 oder 2 steht,
und der Index m so gewählt ist, dass das Polydiorganosiloxan bei einer Temperatur von 23 °C eine Viskosität von 10 bis 500000 mPa.s, bevorzugt von 5000 bis 400000 mPa.s aufweist.

In der Formel (I) sind die Reste R¹ und R² unabhängig voneinander bevorzugt ausgewählt aus Alkylgruppen mit 1 bis 5, insbesondere mit 1 bis 3, C-Atomen, wie Propyl, Ethyl und Methyl, wobei Methyl besonders bevorzugt ist, wobei gegebenenfalls ein Teil der Alkylgruppen, insbesondere Methyl, durch andere Gruppen wie Vinyl, Phenyl oder 3,3,3-Trifluorpropyl ersetzt sein kann. In der Formel (I) ist der Rest R³, falls vorhanden, unabhängig voneinander bevorzugt ausgewählt aus Phenyl-, Vinyl- oder Methylgruppen.

R⁴ ist in der Formel (I) bevorzugt Hydroxy, Alkoxy oder Acetoxy, insbesondere Alkoxy. Beispiele für die Alkoxygruppe für den Rest R⁴ in der Formel (I) sind C₁-C₆-Alkoxygruppen, wobei Methoxy, Ethoxy und Propoxy besonders bevorzugt sind.

Der Index m in der Formel (I) wird so gewählt, dass das Polydiorganosiloxan die vorstehend angegebene Viskosität aufweist. Der Index m in der Formel (I) kann z.B. im Bereich von 10 bis 10000 und bevorzugt 100 bis 1500 liegen.

Das vernetzbare Polydiorganosiloxan ist bevorzugt ein vernetzbares Polydimethylsiloxan. Bevorzugt eingesetzte vernetzbare Polydiorganosiloxane sind Hydroxy-, Alkoxy- oder Acetoxy-terminierte lineare Polydiorganosiloxane, wobei Alkoxy-terminierte lineare Polydiorganosiloxane (α,ω-alkoxyfunktionelle Polydiorganosiloxane) besonders bevorzugt sind, wobei das Polydiorganosiloxan bevorzugt ein Polydimethylsiloxan ist. Die Hydroxy-, Alkoxy- oder Acetoxy-terminierten linearen Polydiorganosiloxane, insbesondere Polydimethylsiloxane, weisen bevorzugt bei 23 °C ein Viskosität von 5000 bis 400000 mPa.s auf.Wie vorstehend erläutert können solche Polydimethylsiloxane gemäß dem Stand der Technik durch teilweisen Einbau anderer organischer Gruppen anstelle von Methyl modifiziert sein.

Die Komponente A) umfasst ferner mindestens ein Alkoxygruppen enthaltendes Siloxan als Vernetzer, das erhältlich ist aus der teilweisen Hydrolyse und Kondensation von einem oder mehreren Alkoxysilanen, wobei mindestens ein Alkoxysilan ein Trialkoxysilan oder ein Tetraalkoxysilan ist, wobei der mittlere Kondensationsgrad des Alkoxygruppen enthaltenden Siloxans mindestens 5 ist.

Monomere Silane wie Alkoxysilane sind als Vernetzer für Polydiorganosiloxane bekannt. Erfindungsgemäß wird ein Alkoxygruppen enthaltendes Siloxan als Vernetzer eingesetzt. Das Siloxan ist durch teilweise Hydrolyse und Kondensation von einem oder mehreren Alkoxysilanen erhältlich, wobei mindestens ein Alkoxysilan ein Trialkoxysilan oder ein Tetraalkoxysilan, bevorzugt ein Trialkoxysilan, ist. Bei dem Siloxan handelt es sich somit um ein Alkoxygruppen enthaltendes Kondensationsprodukt der genannten monomeren Alkoxysilane.

Die Hydrolyse- und Kondensationsreaktionen von Alkoxysilanen sind dem Fachmann bekannt und können schematisch wie folgt dargestellt werden.

≡Si-OR + H₂O → ≡Si-OH + ROH (1)

≡Si-OH + HO-Si≡ → ≡Si-O-Si≡ + H₂O (2)

Bei Zugabe von Wasser und gegebenenfalls mithilfe eines Katalysators hydrolysieren Alkoxygruppen der Silane unter Bildung von Silanolgruppen (Si-OH) am Silan und einem Alkohol (Schritt 1). Die Silanole sind in der Regel nicht stabil und kondensieren spontan unter Bildung von Siloxanbindungen (-Si-O-Si-), so dass Siloxane gebildet werden (Schritt 2). Sofern das Silan mehr als eine Alkoxygruppe aufweist, können höher kondensierte Systeme gebildet werden. Bei teilweiser Hydrolyse wird nur ein Teil der Alkoxygruppen hydrolysiert und kondensiert.

Es können Mono-, Di-, Tri- oder Tetralkoxysilane oder Mischungen davon für die teilweise Hydrolyse und Kondensation eingesetzt werden, wobei mindestens ein Alkoxysilan ein Tri- oder Tetraalkoxysilan ist. In Abhängigkeit von den eingesetzten Alkoxysilanen und der Reaktionsführung, insbesondere der zugegebenen Menge an Wasser, kann der Kondensationsgrad und der Anteil der im gebildeten Siloxan verbleibenden Alkoxygruppen eingestellt werden. Die Alkoxysilane können am Si-Atom gebundene nicht hydrolysierbare Gruppen, insbesondere einwertige Kohlenwasserstoffreste, die gegebenenfalls eine oder mehrere funktionelle Gruppen aufweisen, aufweisen, die im gebildeten Siloxan verbleiben. Der als Nebenprodukt gebildete Alkohol kann entfernt werden, z.B. durch Abdampfen im Vakuum. Daraus gebildete Alkoxygruppen enthaltende Siloxane sind bekannt und im Handel erhältlich.

Das Alkoxygruppen enthaltende Siloxan ist z.B. erhältlich aus der teilweisen Hydrolyse und Kondensation von einem oder mehreren Alkoxysilanen der Formel (II)

R_{q}SiX_{4-q} (II)

worin R unabhängig voneinander ein nicht hydrolysierbarer einwertiger Kohlenwasserstoffrest, welcher gegebenenfalls eine oder mehrere funktionelle Gruppen aufweist, ist, X unabhängig voneinander eine Alkoxygruppe ist und q 0, 1, 2 oder 3 ist, wobei mindestens ein Alkoxysilan ein Alkoxysilan der Formel (II) mit q = 0 oder 1, bevorzugt 1, ist. Bevorzugt werden zur teilweisen Hydrolyse und Kondensation ein oder mehrere Alkoxysilane der Formel (II) mit q = 0 oder 1, bevorzugt 1, eingesetzt.

Beispiele für geeignete Alkoxygruppen für den Rest X in der Formel (II) sind unabhängig voneinander C₁-C₆-Alkoxygruppen, wobei Methoxy-, Ethoxy-, Propoxy- oder Butoxygruppen bevorzugt und Methoxygruppen und Ethoxygruppen besonders bevorzugt sind.

Der Rest R in der Formel (II), insbesondere für Alkoxysilane der Formel (II) mit q = 1, kann z.B. ein linearer oder verzweigter, einwertigen Kohlenwasserstoffrest mit 1 bis 12 C-Atomen, welcher gegebenenfalls zusätzlich eine oder mehrere funktionelle Gruppen aufweist, sein. Beispiele für geeignete Reste R in der Formel (II), insbesondere für Alkoxysilane der Formel (II) mit q = 1, sind unabhängig voneinander Alkylgruppen mit 1 bis 6 C-Atomen, bevorzugt Methyl, Ethyl, Propyl oder Butyl, Alkenylgruppen mit 1 bis 6 C-Atomen, bevorzugt Vinyl, Arylgruppen, bevorzugt Phenyl, Cycloalkylgruppen, wie Cyclohexyl, Aralkylgruppen oder Alkarylgruppen, wobei Methyl, n-Propyl, Vinyl, Phenyl, 2-Aminoethyl-3-aminopropyl, 3-Glycidoxypropyl, 3-Mercaptopropyl besonders bevorzugt sind.

Der Rest R in der Formel (II), insbesondere für Alkoxysilane der Formel (II) mit q = 1, kann gegebenenfalls zusätzlich eine oder mehrere funktionelle Gruppen an dem Kohlenwasserstoffrest mit 1 bis 12 C-Atomen aufweisen, wobei der Kohlenwasserstoffrest einer der vorstehend genannten Beispiele wie Alkyl, Alkenyl, Aryl, Cycloalkyl, Alkaryl oder Arylalkyl sein kann, wobei als Kohlenwasserstoffrest Alkylgruppen mit 1 bis 6 C-Atomen, bevorzugt Methyl, Ethyl oder Propyl, besonders bevorzugt sind. Geeignete funktionelle Gruppen sind z.B. Halogen, wie Chlor, Hydroxy, Alkoxy, Amino, z.B. NH₂, NHR oder NR₂, wobei R unabhängig voneinander Alkyl, Aryl oder Cycloalkyl ist, Mercapto, Glycidoxy, Methacryloxy, Acryloxy und Carbamato. Es können auch zwei oder mehr funktionelle Gruppen im Rest R enthalten sein.

Konkrete Beispiele für Alkoxysilane der Formel (II) sind Methyltrimethoxysilan, Chlormethyltrimethoxysilan, Ethyltrimethoxysilan, Propyltrimethoxysilan, Vinyltrimethoxysilan, Phenyltrimethoxysilan, 3-Mercaptopropyltrimethoxysilan, 3-Aminopropyltrimethoxysilan, 3-Methacryloxypropyltrimethoxysilan, 3-Glycidoxypropyltrimethoxysilan, 2-Aminoethyl-3-aminopropyltrimethoxysilan, N-(n-Butyl)-3-aminopropyltrimethoxysilan, N-Cyclohexylaminomethyltrimethoxysilan, Methacryloxymethyltrimethoxysilan, O-Methylcarbamatomethyltrimethoxysilan und die entsprechenden Verbindungen, bei denen alle Methoxygruppen entweder durch Ethoxygruppen oder durch Propoxygruppen ersetzt sind, also z.B. Methyltriethoxysilan usw. Beispiele für Tetraalkoxysilane sind Tetramethoxysilan, Tetraethoxysilan, Tetra-n- propoxysilan und Tetra-n-butoxysilan. Es können für die Herstellung des Alkoxygruppen enthaltenden Siloxans auch Mischungen von diesen Tri- und/oder Tetraalkoxysilanen eingesetzt werden.

Daneben können auch zusätzlich Monoalkoxysilane und/oder Dialkoxysilane zur Herstellung des Alkoxygruppen enthaltenden Siloxans mit verwendet werden. Beispiele sind Trimethylmethoxysilan, Triethylmethoxysilan, Triphenylmethoxysilan, Dimethyldimethoxysilan, Diethyldimethoxysilan und Diphenyldimethoxysilan und die entsprechenden Silane, in denen alle Methoxygruppen entweder durch Ethoxygruppen oder Propoxygruppen ersetzt sind. Die Monoalkoxysilane und/oder Dialkoxysilane können z.B. eingesetzt werden, um den Kondensationsgrad oder die Verzweigung des gebildeten Siloxans einzustellen.

Bevorzugte Tri- oder Tetraalkoxysilane, die zur Herstellung des Alkoxygruppen enthaltenden Siloxans eingesetzt werden, sind Methyltrimethoxysilan, Methyltriethoxysilan, Vinyltrimethoxysilan, Vinyltriethoxysilan, n-Propyltrimethoxysilan, n-Propyltriethoxysilan, Phenyltrimethoxysilan, Phenyltriethoxysilan, 2-Aminoethyl-3-aminopropyltrimethoxysilan, 2-Aminoethyl-3-aminopropyltriethoxysilan, 3-Glycidoxypropyltrimethoxysilan, 3-Glycidoxypropyltriethoxysilan, 3-Mercaptopropyltrimethoxysilan, 3-Mercaptopropyltriethoxysilan, Tetraethoxysilan, Tetramethoxysilan, und Mischungen davon.

Das Alkoxygruppen enthaltende Siloxan kann nur aus Alkoxysilanen der Formel (II) mit q = 0 gebildet werden, wobei X bevorzugt Methoxy oder Ethoxy ist.

Bevorzugt wird zur Herstellung des Alkoxygruppen enthaltenden Siloxans mindestens ein Alkoxysilan der Formel (II) mit q = 1 verwendet. In diesem Fall weist das Alkoxygruppen enthaltende Siloxan, bevorzugt das Methoxy- oder Ethoxygruppen enthaltende Siloxan, einen oder mehrere, an ein Si-Atom gebundene, nicht hydrolysierbare einwertige Kohlenwasserstoffreste auf, welche gegebenenfalls eine oder mehrere funktionelle Gruppen aufweisen. Bei diesen nicht hydrolysierbaren Kohlenwasserstoffresten handelt es sich besonders bevorzugt um Methyl, Vinyl, n-Propyl, Phenyl, 2-Aminoethyl-3-aminopropyl, 3-Glycidoxypropyl und Mercaptopropyl.

Die Anzahl der nicht hydrolysierbaren einwertigen Kohlenwasserstoffreste, die gegebenenfalls eine oder mehrere funktionelle Gruppen aufweisen, im Alkoxygruppen enthaltenen Siloxan kann mindestens 1, bevorzugter mindestens 2 und besonders bevorzugt mindestens 4 sein.

Das erfindungsgemäß verwendete Alkoxygruppen enthaltende Siloxan weist bevorzugt einen oder mehrere, an ein Si-Atom gebundene, nicht hydrolysierbare einwertige Kohlenwasserstoffreste, welche gegebenenfalls eine oder mehrere funktionelle Gruppen aufweisen, aufweist, auf, wobei der nicht hydrolysierbare Rest bevorzugt Methyl, Vinyl, n-Propyl, Phenyl, 2-Aminoethyl-3-aminopropyl, 3-Glycidoxypropyl und Mercaptopropyl ist.

Das Alkoxygruppen enthaltende Siloxan kann linear, cyclisch oder dreidimensional verzweigt sein. Es handelt sich bevorzugt um ein oligomeres Alkoxygruppen enthaltendes Siloxan.

Der Kondensationsgrad bezieht sich auf die Zahl der miteinander kondensierten monomeren Alkoxysilane im Siloxan und kann auch als Polymerisationsgrad bezeichnet werden. Der mittlere Kondensationsgrad des Alkoxygruppen enthaltenden Siloxans ist mindestens 5, bevorzugter mindestens 6 und besonders bevorzugt mindestens 7. Der mittlere Kondensationsgrad des Alkoxygruppen enthaltenden Siloxans kann in breiten Bereichen je nach Anwendungszweck variieren und kann vorzugsweise z.B. nicht mehr als 15 und besonders bevorzugt nicht mehr als 12 betragen. Es ist verständlich, dass der Kondensationsgrad, insbesondere bei höheren Kondensationsgraden, oft einen Mittelwert darstellt, d.h. in der Regel stellt das Siloxan ein Gemisch aus Verbindungen unterschiedlicher Kondensationsgrade dar.

Unter dem mittleren Kondensationsgrad wird hier der mittlere Kondensationsgrad bezogen auf das Zahlenmittel verstanden. Dieser kann wie dem Fachmann bekannt durch Vermessung des Siloxans mittels ²⁹Si-NMR-Spektroskopie und Auswertung des erhaltenen Spektrums ermittelt werden. Die Messung und Bestimmung kann gemäß den Angaben aus J. Zhang et al, J Sol-Gel Sci Technol, 2010, 56, 197-202. erfolgen.

Solche Alkoxygruppen enthaltende Siloxane, insbesondere Alkoxygruppen enthaltende oligomere Siloxane, sind bekannt und im Handel erhältlich, z.B. Dynasylan®40, Dynasylan® 1146 und Dynasylan® 6490 der Firma Evonik Degussa GmbH.

Das Alkoxygruppen enthaltende Siloxan ist vorzugweise frei von Oximgruppen. Auch das vernetzbare Polydiorganosiloxan ist vorzugweise frei von Oximgruppen. Oximgruppen umfassen Aldoximogruppen und Ketoximogruppen. Solche Oximgruppen sind nach dem Stand der Technik gewöhnlich im Vernetzer von einkomponentigen feuchtigkeitshärtenden Silikonformulierungen enthalten, wenn eine Beschleunigung der Aushärtung durch Zugabe von Wasser erwünscht ist. Wie vorstehend erläutert, werden bei Anwesenheit dieser Oximgruppen bei der Aushärtung Oxime frei, die einen unangenehmen Geruch aufweisen. Ein Vorteil der vorliegenden Erfindung besteht darin, einkomponentige feuchtigkeitshärtende Silikonformulierungen bereitzustellen, die durch Zugabe von Wasser beschleunigt aushärten und gleichzeitig die Freisetzung von Oximen vermieden wird.

In der Komponente A) ist ferner ein oder mehrere Kondensationskatalysatoren enthalten. Diese dienen zur Katalyse der zwischen dem vernetzbaren Polydiorganosiloxan und dem Vernetzer bei Anwesenheit von Feuchtigkeit bzw. Wasser stattfindenden Kondensation bzw. Vernetzung.

Bei dem Kondensationskatalysator kann es sich um jeden üblichen, für diese Systeme eingesetzten Katalysator handeln, wobei es sich bevorzugt um einen Metallkatalysator handelt. Metallkatalysatoren können Verbindungen oder Komplexe von Elementen der Hauptgruppen I, II, IV und V sowie der Nebengruppen I, II, IV, VII und VIII des Periodensystems der Elemente sein. Der Kondensationskatalysator ist bevorzugt eine zinnorganische Verbindung oder ein Titanat bzw. Organotitanat. Diese sind im Handel erhältlich. Es ist auch möglich und in gewissen Fällen sogar bevorzugt, Mischungen verschiedener Katalysatoren einzusetzen.

Bevorzugte zinnorganische Verbindungen sind Dialkylzinnverbindungen, z.B. ausgewählt aus Dimethylzinndi-2-ethylhexanoat, Dimethylzinndilaurat, Di-n-butylzinndiacetat, Di-n-butylzinndi-2-ethylhexanoat, Di-n-butylzinndicaprylat, Di-n-butylzinndi-2,2-dimethyloctanoat, Di-n-butylzinndilaurat, Di-n-butylzinndistearat, Di-n-butylzinndimaleinat, Di-n-butylzinndioleat, Di-n-octylzinndi-2-ethylhexanoat, Di-n-octylzinndi-2,2-dimethyloctanoat, Di-n-octylzinndimaleinat, Di-n-octylzinndilaurat, Di-n-butylzinnoxid und Di-n-octylzinnoxid.

Als Titanate bzw. Organotitanate werden Verbindungen bezeichnet, welche mindestens einen über ein Sauerstoffatom an das Titanatom gebundenen Liganden aufweisen. Als über eine Sauerstoff-Titan-Bindung an das Titanatom gebundene Liganden eignen sich dabei z.B. diejenigen, die ausgewählt sind aus einer Alkoxygruppe, Sulfonatgruppe, Carboxylatgruppe, Dialkylphosphatgruppe, Dialkylpyrophosphatgruppe und Acetylacetonatgruppe. Bevorzugte Titanate sind z.B. Tetrabutyl- oder Tetraisopropyltitanat. Weiterhin geeignete Titanate weisen mindestens einen mehrzähnigen Liganden, auch Chelatligand genannt, auf. Insbesondere ist der mehrzähnige Ligand ein zweizähniger Ligand.

Geeignete Titanate sind beispielsweise unter den Handelsnamen Tyzor® AA-105, PITA, TnBT, TPT, TOT, IAM, IBAY kommerziell erhältlich von der Firma Dorf Ketal, Indien.

Die Anteile der vorstehend erläuterten Bestandteile in der Komponente A) können in breiten Bereichen variieren. Beispielsweise kann die Komponente A) 25 bis 60 Gew.-% vernetzbares Polydiorganosiloxan, insbesondere OH-terminiertes Polydiorganosiloxan, 0,1 bis 20 Gew.-%, bevorzugt 0,1 bis 10 Gew.-% und besonders bevorzugt 0.1 bis 6 Gew.-% Alkoxygruppen enthaltendes Siloxan als Vernetzer und/oder 0,001 bis 4 Gew.-%, bevorzugt 0,01 bis 1 Gew.-% Kondensationskatalysator, insbesondere Sn- und/oder Ti-Katalysator, enthalten. Die Mengenangaben beziehen sich auf das Gesamtgewicht der Komponente A).

Die Komponente A) kann gegebenenfalls noch weitere Bestandteile enthalten, wie sie für einkomponentige feuchtigkeitshärtende Silikonformulierungen üblich sind. Derartige zusätzliche Bestandteile sind z.B. Weichmacher, anorganische und/oder organische Füllstoffe, Geruchsstoffe, Benetzungshilfsmittel, Pigmente, Haftvermittler, Verarbeitungshilfsmittel, Rheologiemodifikatoren, Stabilisatoren, Farbstoffe, Inhibitoren, Hitzestabilisatoren, Antistatika, Flammschutzmittel, Biozide, Wachse, Verlaufmittel, Thixotropierungsmittel.

Vorzugsweise weist die Silikonformulierung gegebenenfalls einen oder mehrere Füllstoffe auf. Die Füllstoffe können z.B. sowohl rheologische Eigenschaften der nicht ausgehärteten Formulierung als auch die mechanischen Eigenschaften und die Oberflächenbeschaffenheit der ausgehärteten Formulierung beeinflussen. Es kann von Vorteil sein, eine Mischung verschiedener Füllstoffe einzusetzen.

Die Komponente A) kann z.B. 10 bis 70 Gew.-%, bevorzugt 10 bis 50 Gew.-%, Füllstoffe enthalten.

Beispiele für geeignete Füllstoffe sind anorganische oder organische Füllstoffe, wie natürliche, gemahlene oder gefällte Calciumcarbonate oder Kreiden, welche gegebenenfalls oberflächenbehandelt sind, z.B. mit Fettsäuren, Kieselsäuren, insbesondere pyrogene Kieselsäuren, Aluminiumhydroxide wie Aluminiumtrihydroxid, Russ, insbesondere Industrierusse, Bariumsulfat, Dolomit, Kieselerden, Kaolin, Hohlkugeln, Quarz, calcinierte Aluminiumoxide, Aluminiumsilicate, Magnesium-Aluminiumsilicate, Zirkoniumsilicate, Cristobalitmehl, Diatomeenerde, Glimmer, Titanoxide, Zirconiumoxide, Gips, Graphit, Kohlefasern, Zeolithe, oder Glasfasern, deren Oberfläche gegebenenfalls mit einem Hydrophobierungsmittel behandelt ist.

Die Komponente A) enthält vorzugsweise keine gefällte Kieselsäure, da diese die Lagerstabilität der Zusammensetzung beeinträchtigt.

Ein Beispiel für gegebenenfalls einzusetzende Weichmacher sind trialkylsilylterminierte Polydimethylsiloxane, wobei die trialkylsilylterminierten Polydimethylsiloxane bevorzugt eine Viskosität bei 23°C im Bereich von 1 bis 10000 mPa.s aufweisen. Es können auch z.B. trimethylsilylterminierte Polydimethylsiloxane eingesetzt werden, bei denen einige der Methylgruppen durch andere organische Gruppen wie zum Beispiel Phenyl-, Vinyl- oder Trifluorpropylgruppen ersetzt sind. Das Polydimethylsiloxan kann auch monofunktionell sein, d.h. ein Ende ist reaktiv, z.B. über eine Hydroxy-Endgruppe. Bestimmte Kohlenwasserstoffe können ebenfalls als Weichmacher eingesetzt werden.

Die Bestandteile der Komponente A) können auf übliche Weise miteinander vermischt werden, z.B. mithilfe eines geeigneten Mischaggregats wie z.B. eines Zwangs- oder Planetenmischers.

Die zweikomponentige Zusammensetzung umfasst als Komponente B) einen Beschleuniger umfassend Wasser, wobei der Beschleuniger bevorzugt mindestens 15 Gew.-%, bevorzugter mindestens 20 Gew.-% und besonders bevorzugt mindestens 30 Gew.-% Wasser enthält. Der Beschleuniger kann auch nur aus Wasser bestehen oder im wesentlichen aus Wasser bestehen. Die Komponente B) kann z.B. bis 100 Gew.-% und bevorzugt bis 60 Gew.-% Wasser enthalten. In einer zweckmäßigen Ausführungsform kann die Komponente B) z.B einen Wassergehalt im Bereich von 20 bis 50 Gew.-% aufweisen. Die Mengenangaben beziehen sich jeweils auf das Gesamtgewicht der Komponente B).

Die Komponente B) kann von fließfähiger oder pastöser Konsistenz sein. Bevorzugt handelt es sich um eine wässrige Dispersion.

Die Komponente B) kann gegebenenfalls mindestens ein Additiv ausgewählt aus einem Emulgator, einem Verdickungsmittel, einem Füllstoff und mindestens einem Trägermaterial ausgewählt aus einem Polydiorganosiloxan und einem Weichmacher umfassen. Bevorzugt umfasst die Komponente B) mindestens einen Emulgator, mindestens ein Verdickungsmittel, mindestens einen Füllstoff und mindestens ein Trägermaterial ausgewählt aus einem Polydiorganosiloxan und einem Weichmacher.

Das Polydiorganosiloxan kann z.B. ein Polydiorganosiloxan der folgenden Formel sein

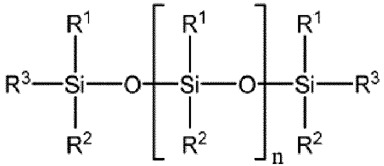

Dabei stehen die Reste R¹ und R² unabhängig voneinander für lineare oder verzweigte, einwertige Kohlenwasserstoffreste mit 1 bis 12 C-Atomen, welche gegebenenfalls ein oder mehrere Heteroatome, und gegebenenfalls eine oder mehrere C-C-Mehrfachbindungen und/oder gegebenenfalls cycloaliphatische und/oder aromatische Anteile aufweisen. Die Reste R¹ und R² sind unabhängig voneinander bevorzugt C₁-C₆-Alkyl, bevorzugt Methyl.

Die Reste R³ stehen unabhängig voneinander für Hydroxylgruppen oder für lineare oder verzweigte, einwertige Kohlenwasserstoffreste mit 1 bis 12 C-Atomen, welche gegebenenfalls ein oder mehrere Heteroatome, und gegebenenfalls eine oder mehrere C-C-Mehrfachbindungen und/oder gegebenenfalls cycloaliphatische und/oder aromatische Anteile aufweisen. Bevorzugt stehen die Reste R³ für Reste, welche ausgewählt sind aus der Gruppe bestehend aus Hydroxylgruppen, Methylgruppen, Ethylgruppen, Vinylgruppen und Phenylgruppen. Meist bevorzugt stehen die Reste R³ für Hydroxylgruppen, das heißt, dass es sich beim Polydiorganosiloxan um ein reaktives Trägermaterial handelt.

Weiterhin ist der Index n so gewählt ist, dass das Polydiorganosiloxan bei einer Temperatur von 23 °C eine Viskosität von 1 bis 500000 mPa.s, insbesondere 100 bis 200000 mPa.s, aufweist.

Als Weichmacher für die Komponente B) eignen sich insbesondere Weichmacher, wie sie auch in der einkomponentigen, feuchtigkeitshärtenden Silikonzusammensetzung aus Komponente A) enthalten sein können und bereits vorhergehend beschrieben worden sind. Weiterhin eignen sich z.B. Ester organischer Carbonsäuren oder deren Anhydride, wie Phthalate, beispielsweise Dioctylphthalat, Diisononylphthalat oder Diisodecylphthalat, Adipate, beispielsweise Dioctyladipat, Azelate und Sebacate, Polyole, beispielsweise Polyoxyalkylenpolyole oder Polyesterpolyole, Polyetheramine, organische Phosphor- und Sulfonsäureester, Polybutene oder blockierte Polyurethanpolymere.

Als Verdickungsmittel in der Komponente B) eignen sich z.B. wasserlösliche bzw. wasserquellbare Polymere oder anorganische Verdickungsmittel. Beispiele für organische natürliche Verdickungsmittel sind Agar-agar, Carrageen, Tragant, Gummi arabicum, Alginate, Pektine, Polyosen, GuarMehl, Stärke, Dextrine, Gelatine oder Casein. Beispiele für organische voll- oder teilsynthetische Verdickungsmittel sind Carboxymethylcellulose, Celluloseether, Hydroxyethylcellulose, Hydroxypropylcellulose, Poly(meth)-acrylsäurederivate, Poly(meth)acrylate, Polyvinylether, Polyvinylalkohol, Polyamide oder Polyimine. Beispiele für anorganische Verdickungsmittel sind Polykieselsäuren, hochdisperse, pyrogene, hydrophile Kieselsäuren und Tonmineralien wie Montmorillonit.

Als Füllstoffe der Komponente B) eignen sich z.B. jene, welche auch in der einkomponentigen, feuchtigkeitshärtenden Silikonzusammensetzung aus Komponente A) enthalten sein können und bereits vorhergehend beschrieben worden sind. Bevorzugt ist der in der Komponente B) enthaltene Füllstoff, ein Füllstoff, der verdickend wirkt und Wasser bindet. Meist bevorzugt ist der Füllstoff in der Komponente B) ausgewählt aus der Gruppe bestehend aus Kieselsäuren, insbesondere pyrogener Kieselsäure, Zeolithen und Calciumcarbonaten, wobei die Komponente B) bevorzugt keine gefällte Kieselsäure enthält.

Die Komponente B) kann ferner gegebenenfalls mindestens einen Emulgator enthalten. Bei dem Emulgator kann es sich z.B. um ein anionisches, kationisches, nichtionisches oder amphoteres Tensid handeln. Gegebenenfalls enthält die Komponente B) zusätzlich weitere Hilfsstoffe wie beispielsweise Thixotropierungsmittel, Dispergiermittel, Fungizide oder Stabilisatoren.

Vorzugsweise beträgt das Verhältnis von Komponente A) zu Komponente B) 100:1 bis 100:10, besonders bevorzugt 100:2 bis 100:5.

Die erfindungsgemäße zweikomponentige Zusammensetzung kann als Klebstoff oder Dichtstoff in einem Verfahren zum Verkleben oder Verfugen von Substraten verwendet werden, wodurch eine beschleunigte Aushärtung des Kleb- oder Dichtstoffs ermöglicht wird. Das erfindungsgemäße Verfahren umfasst
a) das Einmischen der Komponente B) in die Komponente A), um eine Mischung zu erhalten,
b) die Applikation der Mischung auf ein Substrat und Inkontaktbringen der auf dem Substrat applizierten Mischung mit einem weiteren Substrat, um eine Klebverbindung zwischen den Substraten zu erhalten, oder das Einbringen der Mischung in eine Fuge zwischen zwei Substraten, um eine Verfugung zwischen den Substraten zu erhalten, und
c) das Härten der Mischung,
wobei das Einmischen gemäß Schritt a) vor oder während der Applikation oder Einbringung gemäß Schritt b) durchgeführt wird.

Die Komponenten werden zur Lagerung getrennt voneinander aufbewahrt. Die Vermischung der Komponenten A) und B) in Schritt a) kann auf übliche Weise erfolgen, z.B. durch Einrühren der Komponente B) in die Komponente A), was manuell oder mithilfe einer geeigneten Rührvorrichtung, z.B. mit einem Statikmischer, Dynamikmischer, Speedmixer, Dissolver etc. erfolgen kann. Die beiden Komponenten können auch für die Applikation oder Einbringung aus den getrennten Aufbewahrungsbehältern, z.B. mit Zahnradpumpen, ausgepresst und vermischt werden. Die Vermischung kann dabei z.B. in Zufuhrleitungen oder Düsen für die Applikation oder Einbringung erfolgen oder unmittelbar auf dem Substrat oder in der Fuge erfolgen.

Das Einmischen gemäß Schritt a) kann somit vor oder während der Applikation oder Einbringung gemäß Schritt b) durchgeführt wird. Die Vermischung sollte relativ kurz vor der weiteren Verarbeitung erfolgen, da mit der Vermischung der Aushärteprozess beginnt.

Die Applikation auf ein Substrat oder das Einbringen in eine Fuge zwischen Substraten gemäß Schritt b) kann auf übliche Weise erfolgen, z.B. von Hand oder in einem automatisierten Prozess mithilfe von Robotern. Bei Verkleben wird das mit der Mischung versehene Substrat mit einem weiteren Substrat in Kontakt gebracht, gegebenenfalls unter Druck, um eine Klebverbindung zwischen den Substraten zu erhalten. Danach lässt man in Schritt c) die Mischung härten, gewöhnlich bei Raumtemperatur, um die Verklebung oder Verfugung der Substrate zu erreichen. Auf diese Weise werden die erfindungsgemäßen verklebten oder verfugten Substrate mit der gehärteten Mischung aus Komponente A) und B) als Kleb- oder Dichtmaterial erhalten.

Die zu verklebenden oder verfugenden Substrate können aus dem gleichen oder aus einem verschiedenen Material sein. Es können alle üblichen Materialien mit der erfindungsgemäßen zweikomponentigen Zusammensetzung verklebt oder verfugt werden. Bevorzugte Materialien zum Verkleben oder Verfugen sind Glas, Metalle, wie z.B. Aluminium, Kupfer, Stahl oder Edelstahl, Beton, Mörtel, Bausteine, wie z.B. Sandstein und Kalksandstein, Asphalt, Bitumen, Kunststoffe, wie z.B. Polyolefine, PVC, Tedlar, PET, Polyamid, Polycarbonat, Polystyrol oder Polyacrylat und Verbundwerkstoffe wie CFK.

Die erfindungsgemäße zweikomponentige Zusammensetzung kann somit als Klebstoff oder Dichtstoff verwendet werden, z.B. in den Bereichen Bau, Sanitär, Automobil, Solartechnik, Windkrafttechnik, weisse Ware, Fassaden- und Fensterbau, Elektronik und Boots- und Schiffbau.

### Beispiele

Im Folgenden werden konkrete Ausführungsformen der Erfindung ausgeführt, die den Umfang der Erfindung aber nicht beschränken sollen. Sofern nicht anders angegeben, beziehen sich Angaben auf das Gewicht. Alle Ausprüfungen wurden bei 23°C und 50% r.F. (relative Feuchtigkeit) durchgeführt.

Die in den nachstehenden Tabellen angegebenen Mengenanteile der Bestandteile für die Komponente A), bezogen auf das Gesamtgewicht der Komponente A), wurden eingewogen und an einem Speedmixer der Firma Hauschild bei 23°C und 50% r.F. für 20 s bei 2000 U/min unter Anlegen eines Vakuums gemischt. Die erhaltenen Mischungen wurden luftdicht verschlossen bei 23°C gelagert.

Als Komponente B) wurden Handelsprodukte der Firma Sika Schweiz AG eingesetzt, nämlich PowerCure Accelerator® (PowerCure) mit einem Wassergehalt von etwa 20% und Booster 35W mit einem Wassergehalt von etwa 35% (Booster).

In einem ersten Versuch wurde die Komponente A) als Referenz alleine appliziert (Vergleich). In einem weiteren Versuch wurde die jeweilige Komponente A) mit einer Komponente B) mittels Speedmixer der Firma Hauschild bei 23°C und 50% r.F. für 20 s bei 2000 U/min unter Anlegen eines Vakuums vermischt, wobei der Anteil der Komponente B) am Gesamtgewicht der Mischung jeweils 4 Gew.-% betrug. Unmittelbar nach der Mischung wurde die erhaltene Mischung für die Prüfungen verwendet.

Zur Bestimmung der Hautbildezeiten (SOT) wurde die zu prüfende Mischung auf einer Fläche von ca. 20 cm² mit einer Dicke von ca. 1 cm ausgestrichen. Es wurde darauf geachtet, dass die Oberfläche glatt war. Der Zeitpunkt des Ausstreichens markierte den Beginn der Messung. Mit einer PE-Pipette wurde die Oberfläche der erhärtenden Mischung berührt. Die Hautbildezeit war erreicht, wenn die PE-Pipette ohne sichtbare Anhaftungen abgenommen werden konnte.

Zur Bestimmung der Durchhärtungszeit wurde ein Teflon-Keil vom tiefen Ende her mit der zu prüfenden Mischung befüllt. Die Oberfläche wurde mit einem Spatel abgeglättet. Die Durchhärtung wurde geprüft, indem die erhärtete Mischung vom flachen Ende des Keils her herausgezogen wurde, bis Anhaftungen an Boden und/oder Wänden des Keils sichtbar wurden. Bestimmt wurde die benötigte Zeit zum Erreichen einer Durchhärtung bis in 10 mm Tiefe.

Die Bestimmung der Shore A Härte erfolgte zu den angegebenen Zeiten an einem Shore A Prüfgerät der Firma Bareiss nach DIN ISO 7619-1. Zur Bestimmung der Shore A Härte wurden runde Probekörper mit einem Durchmesser von 42 mm und einer Dicke von 6 mm hergestellt.

Zugfestigkeiten und Bruchdehnungen wurden nach ISO 37 an S2-Hanteln an einer Z010 Zugprüfmaschine der Firma Zwick bestimmt. Die Mischungen wurden dazu zu Fellen von 2 mm Dicke gerakelt und für 7d bei 23°C und 50% r.F. ausgehärtet.

Die verwendeten Chemikalien können der folgenden Tabelle entnommen werden.

| Bezeichnung | Beschreibung |
|---|---|
| OH-PDMS | α,ω-Bis-OH-Poly(dimethylsiloxan) mit einer Viskosität von 20'000 mPas bei 23°C |
| MeO₂MeSi-PDMS | α,ω-Bis(Dimethoxymethylsilyl)-poly(dimethylsiloxan) mit einer Viskosität von 50'000 mPas bei 23°C |
| PDMS 100 | α,ω-Bis(trimethylsilyl)-poly(dimethylsiloxan) mit einer Viskosität von 100 mPas bei 23°C |
| Kreide 1 | Unbehandelte, gemahlene Kreide mit einer BET-Oberfläche von 5 m²/g |
| Kreide 2 | Hydrophobisierte Fällungskreide mit einer BET-Oberfläche von 15-24 m²/g |
| Silica 1 | Hydrophile Flammkieselsäure mit einer BET-Oberfläche von 150 m²/g |
| Silica 2 | Hydrophobe Flammkieselsäure mit einer BET-Oberfläche von 150 m²/g |
| Russ | Industrieruss mit einer BET-Oberfläche von 84 m²/g |
| Additiv | EO-PO-Blockcopolymerisat mit 40% EO-Anteil |
| Vernetzer | Alkoxy-silan oder -siloxan wie in den jeweiligen Beispielen angegeben |
| Katalysator 1 | Reaktionsprodukt aus Dibutylzinnoxid und Tetraethoxysilan |
| Katalysator 2 | Di-isobutoxy-bis(ethylacetoacetato)titanate |

Die folgenden Tabellen enthalten Übersichten der Ergebnisse.

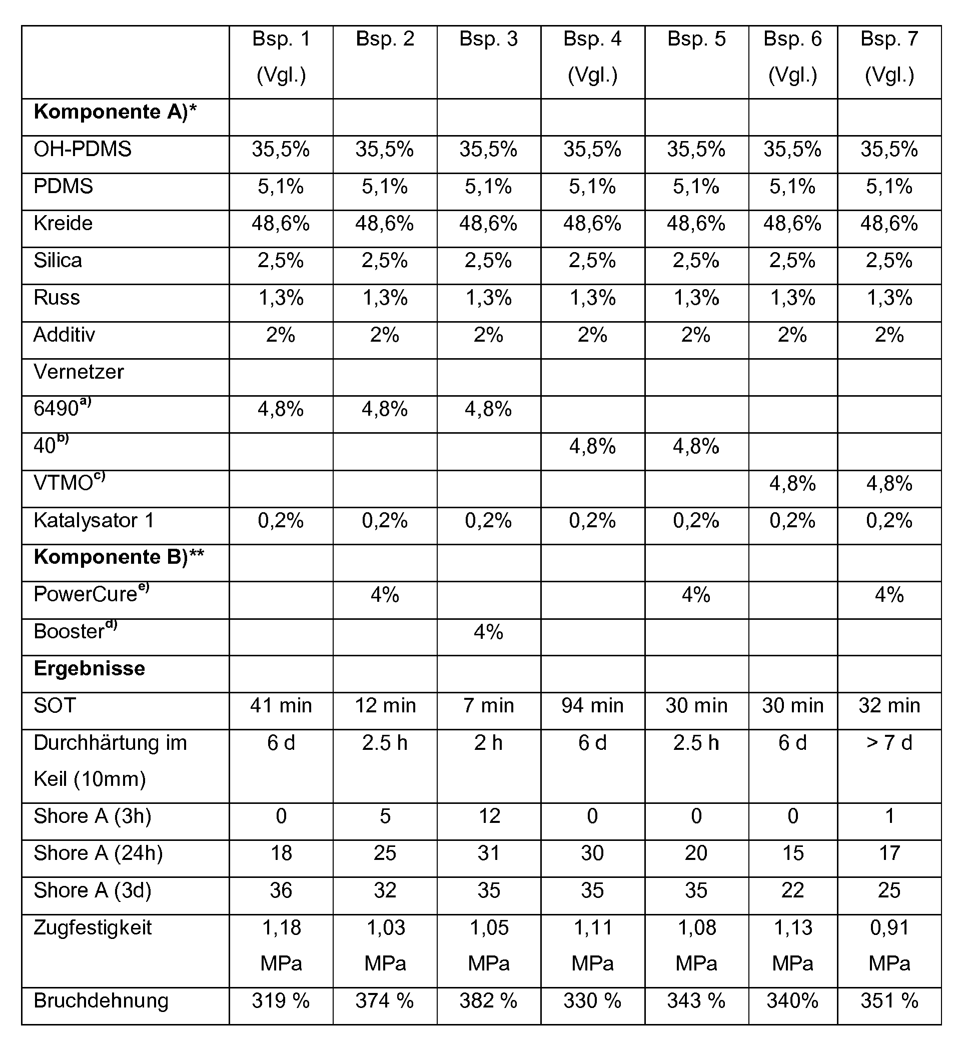

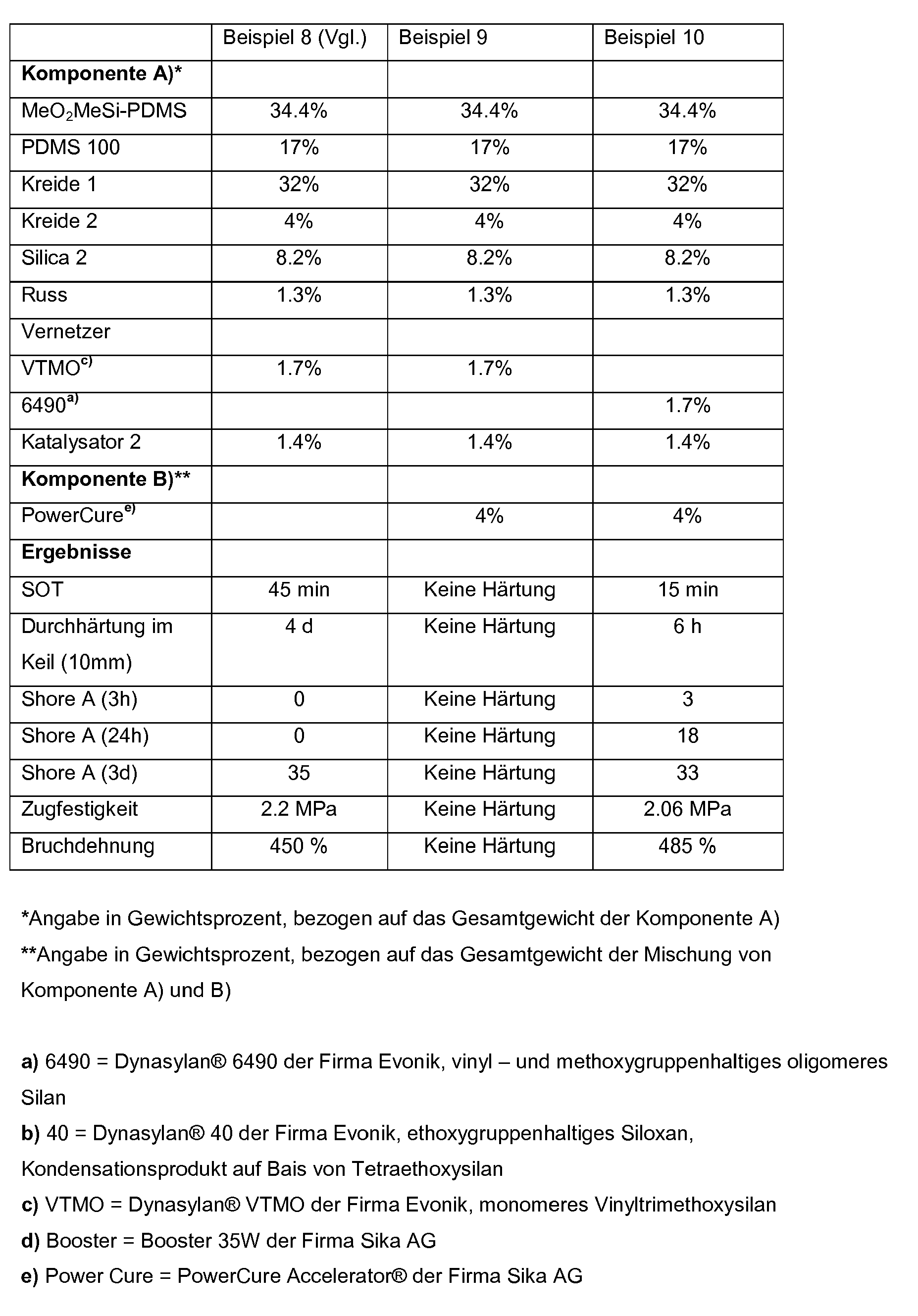

## Patentansprüche

1. Zweikomponentige Zusammensetzung, umfassend als Komponente A) eine einkomponentige feuchtigkeitshärtende Silikonzusammensetzung umfassend
a) mindestens ein vernetzbares Polydiorganosiloxan,
b) mindestens ein Alkoxygruppen enthaltendes Siloxan als Vernetzer, erhältlich aus der teilweisen Hydrolyse und Kondensation von einem oder mehreren Alkoxysilanen, wobei mindestens ein Alkoxysilan ein Trialkoxysilan oder ein Tetraalkoxysilan ist, wobei der mittlere Kondensationsgrad des Alkoxygruppen enthaltenden Siloxans mindestens 5 ist, und
c) mindestens einen Kondensationskatalysator,
und als Komponente B) einen Beschleuniger umfassend Wasser.

2. Zweikomponentige Zusammensetzung nach Anspruch 1, wobei das Alkoxygruppen enthaltende Siloxan und gegebenenfalls das vernetzbare Polydiorganosiloxan frei von Oximgruppen sind.

3. Zweikomponentige Zusammensetzung nach Anspruch 1 oder Anspruch 2, wobei das Alkoxygruppen enthaltende Siloxan erhältlich ist aus der teilweisen Hydrolyse und Kondensation von einem oder mehreren Alkoxysilanen der Formel (II)
R_{q}SiX_{4-q} (II)
worin R unabhängig voneinander ein nicht hydrolysierbarer einwertiger Kohlenwasserstoffrest, welcher gegebenenfalls eine oder mehrere funktionelle Gruppen aufweist, ist, X unabhängig voneinander eine Alkoxygruppe ist und q 0, 1, 2 oder 3 ist, wobei mindestens ein Alkoxysilan ein Alkoxysilan der Formel (II) mit q = 0 oder 1 ist.

4. Zweikomponentige Zusammensetzung nach Anspruch 3, wobei mindestens ein Alkoxysilan ein Alkoxysilan der Formel (II) mit q = 1 ist, wobei R unabhängig voneinander ein nicht hydrolysierbarer einwertiger Kohlenwasserstoffrest, welcher gegebenenfalls eine oder mehrere funktionelle Gruppen aufweist, bevorzugt Methyl, n-Propyl, Vinyl, Phenyl, 2-Aminoethyl-3-aminopropyl, 3-Glycidoxypropyl, 3-Mercaptopropyl ist und/oder X C₁-C₆-Alkoxy, bevorzugt Methoxy, Ethoxy oder Propoxy, ist.

5. Zweikomponentige Zusammensetzung nach irgendeinem der Ansprüche 1 bis 4, wobei das Alkoxygruppen enthaltende Siloxan in einer Menge von 0,1 bis 20 Gew.-%, bevorzugt 0,1 bis 10 Gew.-%, in der Komponente A) enthalten ist.

6. Zweikomponentige Zusammensetzung nach irgendeinem der Ansprüche 1 bis 5, wobei das vernetzbare Polydiorganosiloxan Hydroxygruppen oder maskierte Hydroxygruppen, bevorzugt Alkoxy- oder Acetoxygruppen, aufweist, die an einem Si-Atom gebunden sind und bevorzugt endständig angeordnet sind, wobei das Polydiorganosiloxan bevorzugt ein lineares Polydimethylsiloxan ist.

7. Zweikomponentige Zusammensetzung nach irgendeinem der Ansprüche 1 bis 6, wobei das Polydiorganosiloxan ein lineares Polydiorganosiloxan ist, bevorzugt ein Polydiorganosiloxan der Formel (I) 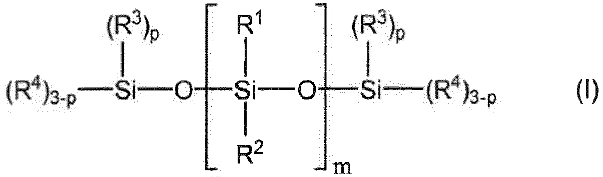 worin die Reste R¹, R² und R³ unabhängig voneinander für lineare oder verzweigte, einwertige Kohlenwasserstoffreste mit 1 bis 12 C-Atomen stehen, welche gegebenenfalls ein oder mehrere Heteroatome, und gegebenenfalls eine oder mehrere C-C-Mehrfachbindungen und/oder gegebenenfalls cycloaliphatische und/oder aromatische Anteile aufweisen;
R⁴ unabhängig voneinander eine Hydroxygruppe oder eine blockierte Hydroxygruppe, bevorzugt eine Alkoxygruppe oder Acetoxygruppe, ist, wobei R⁴ bevorzugt eine Alkoxygruppe ist;
der Index p für einen Wert von 0, 1 oder 2 steht; und
der Index m so gewählt ist, dass das Polydiorganosiloxan bei einer Temperatur von 23 °C eine Viskosität von 10 bis 500000 mPa.s aufweist.

8. Zweikomponentige Zusammensetzung nach irgendeinem der Ansprüche 1 bis 7, wobei das Polydiorganosiloxan ein OH-terminiertes, Alkoxy-terminiertes oder Acetoxy-terminiertes Polydiorganosiloxan, insbesondere ein Alkoxy-terminiertes Polydimethylsiloxan, ist, das vorzugsweise bei einer Temperatur von 23 °C eine Viskosität von 10 bis 500000 mPa.s, insbesondere von 5000 bis 400000 mPa.s, aufweist.

9. Zweikomponentige Zusammensetzung nach irgendeinem der Ansprüche 1 bis 8, wobei die Komponente B) mindestens 15 Gew.-%, bevorzugt mindestens 20 Gew.-%, Wasser enthält.

10. Zweikomponentige Zusammensetzung nach irgendeinem der Ansprüche 1 bis 9, wobei die Komponente B) eine wässrige Dispersion ist.

11. Zweikomponentige Zusammensetzung nach irgendeinem der Ansprüche 1 bis 10, wobei die Komponente B) mindestens ein Additiv ausgewählt aus einem Emulgator, einem Verdickungsmittel, einem Füllstoff und mindestens einem Trägermaterial ausgewählt aus einem Polydiorganosiloxan und einem Weichmacher umfasst, wobei die Komponente B) bevorzugt mindestens einen Emulgator, mindestens ein Verdickungsmittel, mindestens einen Füllstoff und mindestens ein Trägermaterial ausgewählt aus einem Polydiorganosiloxan und einem Weichmacher umfasst.

12. Verfahren zum Verkleben oder Verfugen von Substraten mit einer zweikomponentigen Zusammensetzung nach irgendeinem der Ansprüche 1 bis 11, umfassend
a) das Einmischen der Komponente B) in die Komponente A), um eine Mischung zu erhalten,
b) die Applikation der Mischung auf ein Substrat und Inkontaktbringen der auf dem Substrat applizierten Mischung mit einem weiteren Substrat, um eine Klebverbindung zwischen den Substraten zu erhalten, oder
das Einbringen der Mischung in eine Fuge zwischen zwei Substraten, um eine Verfugung zwischen den Substraten zu erhalten, und
c) das Härten der Mischung,
wobei das Einmischen gemäß Schritt a) vor oder während der Applikation oder Einbringung gemäß Schritt b) durchgeführt wird.

13. Verfahren zum Verkleben oder Verfugen von Substraten nach Anspruch 12, wobei die zu verklebenden oder verfugenden Substrate aus dem gleichen oder einem verschiedenen Material sind, wobei das Material bevorzugt aus Glas, Metall, Beton, Mörtel, Baustein, Asphalt, Bitumen, Kunststoff oder einem Verbundwerkstoff ausgewählt ist.

14. Verwendung einer zweikomponentigen Zusammensetzung nach irgendeinem der Ansprüche 1 bis 11 als Klebstoff oder Dichtstoff, insbesondere in den Bereichen Bau, Sanitär, Automobil, Solartechnik, Windkrafttechnik, weisse Ware, Fassaden- und Fensterbau, Elektronik und Boots- und Schiffbau.

## Claims

1. Two-pack composition comprising
as component A) a one-pack moisture-curing silicone composition comprising
a) at least one crosslinkable polydiorganosiloxane,
b) at least one siloxane comprising alkoxy groups, as crosslinker, obtainable from the partial hydrolysis and condensation of one or more alkoxysilanes, at least one alkoxysilane being a trialkoxysilane or a tetraalkoxysilane, and the average degree of condensation of the siloxane comprising alkoxy groups being at least 5, and
c) at least one condensation catalyst,
and as component B) an accelerator comprising water.

2. Two-pack composition according to Claim 1, the siloxane comprising alkoxy groups and optionally the crosslinkable polydiorganosiloxane being free from oxime groups.

3. Two-pack composition according to Claim 1 or Claim 2, the siloxane comprising alkoxy groups being obtainable from the partial hydrolysis and condensation of one or more alkoxysilanes of the formula (II)
R_{q}SiX_{4-q} (II)
in which R independently at each occurrence is a nonhydrolyzable monovalent hydrocarbon radical which optionally has one or more functional groups, X independently at each occurrence is an alkoxy group, and q is 0, 1, 2 or 3, at least one alkoxysilane being an alkoxysilane of the formula (II) with q = 0 or 1.

4. Two-pack composition according to Claim 3, at least one alkoxysilane being an alkoxysilane of the formula (II) with q = 1, R independently at each occurrence being a nonhydrolyzable monovalent hydrocarbon radical which optionally has one or more functional groups, preferably methyl, n-propyl, vinyl, phenyl, 2-aminoethyl-3-aminopropyl, 3-glycidyloxypropyl, or 3-mercaptopropyl, and/or X being C₁-C₆ alkoxy, preferably methoxy, ethoxy, or propoxy.

5. Two-pack composition according to any one of Claims 1 to 4, the siloxane comprising alkoxy groups being present in an amount of 0.1 to 20 wt%, preferably 0.1 to 10 wt%, in component A).

6. Two-pack composition according to any one of Claims 1 to 5, the crosslinkable polydiorganosiloxane having hydroxyl groups or masked hydroxyl groups, preferably alkoxy or acetoxy groups, which are bonded to an Si atom and are preferably disposed terminally, the polydiorganosiloxane preferably being a linear polydimethylsiloxane.

7. Two-pack composition according to any one of Claims 1 to 6, the polydiorganosiloxane being a linear polydiorganosiloxane, preferably a polydiorganosiloxane of the formula (I) 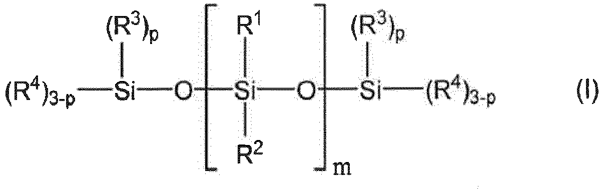 in which the radicals R¹, R² and R³ independently of one another are linear or branched, monovalent hydrocarbon radicals having 1 to 12 C atoms, which optionally have one or more heteroatoms, and optionally have one or more C-C multiple bonds and/or optionally have cycloaliphatic and/or aromatic moieties; R⁴ independently at each occurrence is a hydroxyl group or a blocked hydroxyl group, preferably an alkoxy group or acetoxy group, R⁴ preferably being an alkoxy group; the index p is a value of 0, 1 or 2; and the index m is selected such that at a temperature of 23°C the polydiorganosiloxane has a viscosity of 10 to 500000 mPa.s.

8. Two-pack composition according to any one of Claims 1 to 7, the polydiorganosiloxane being an OH-terminated alkoxy-terminated, or acetoxy-terminated polydiorganosiloxane, more particularly an alkoxy-terminated polydimethylsiloxane, which preferably at a temperature of 23°C has a viscosity of 10 to 500000 mPa.s, more particularly of 5000 to 400000 mPa.s.

9. Two-pack composition according to any one of Claims 1 to 8, component B) comprising at least 15 wt%, preferably at least 20 wt%, of water.

10. Two-pack composition according to any one of Claims 1 to 9, component B) being an aqueous dispersion.

11. Two-pack composition according to any one of Claims 1 to 10, component B) comprising at least one additive selected from an emulsifier, a thickener, a filler, and at least one carrier material selected from a polydiorganosiloxane and a plasticizer, component B) preferably comprising at least one emulsifier, at least one thickener, at least one filler, and at least one carrier material selected from a polydiorganosiloxane and a plasticizer.

12. Method for adhesively bonding or joining substrates with a two-pack composition according to any one of Claims 1 to 11, comprising
a) the incorporation of component B) into component A) by mixing, to give a mixture,
b) the application of the mixture to a substrate and contacting of the mixture applied to the substrate with a further substrate, to give an adhesive bond between the substrates, or
the introduction of the mixture into a gap between two substrates, in order to obtain a joint between the substrates, and
c) the curing of the mixture,
the incorporation by mixing of step a) being carried out before or during the application or introduction of step b).

13. Method for adhesively bonding or joining substrates according to Claim 12, the substrates to be adhesively bonded or joined being of the same or a different material, the material being selected preferably from glass, metal, concrete, mortar, construction stone, asphalt, bitumen, plastic, or a composite material.

14. Use of a two-pack composition according to any one of Claims 1 to 11 as adhesive or sealant, more particularly in the sectors of construction, sanitary, automotive, solar engineering, wind power engineering, white goods, architectural facings construction and window construction, electronics, and boat- and shipbuilding.

## Revendications

1. Composition bicomposante, comprenant :
en tant que composant A), une composition de silicone monocomposante durcissant à l'humidité, comprenant :
a) au moins un polydiorganosiloxane réticulable,
b) au moins un siloxane contenant des groupes alcoxy en tant qu'agent de réticulation, pouvant être obtenu par l'hydrolyse partielle et la condensation d'un ou de plusieurs alcoxysilanes, au moins un alcoxysilane étant un trialcoxysilane ou un tétraalcoxysilane, le degré de condensation moyen du siloxane contenant des groupes alcoxy étant d'au moins 5, et
c) au moins un catalyseur de condensation,
et en tant que composant B), un accélérateur comprenant de l'eau.

2. Composition bicomposante selon la revendication 1, dans laquelle le siloxane contenant des groupes alcoxy et éventuellement le polydiorganosiloxane réticulable sont exempts de groupes oxime.

3. Composition bicomposante selon la revendication 1 ou la revendication 2, dans laquelle le siloxane contenant des groupes alcoxy peut être obtenu par l'hydrolyse partielle et la condensation d'un ou de plusieurs alcoxysilanes de formule (II)
R_{q}SiX_{4-q} (II)
dans laquelle les R sont indépendamment les uns des autres un radical hydrocarboné monovalent non hydrolysable qui comprend éventuellement un ou plusieurs groupes fonctionnels, les X sont indépendamment les uns des autres un groupe alcoxy, et q représente 0, 1, 2 ou 3, au moins un alcoxysilane étant un alcoxysilane de formule (II) avec q = 0 ou 1.

4. Composition bicomposante selon la revendication 3, dans laquelle au moins un alcoxysilane est un alcoxysilane de formule (II) avec q = 1, les R étant indépendamment les uns des autres un radical hydrocarboné monovalent non hydrolysable qui comprend éventuellement un ou plusieurs groupes fonctionnels, de préférence méthyle, n-propyle, vinyle, phényle, 2-aminoéthyl-3-aminopropyle, 3-glycidoxypropyle, 3-mercaptopropyle, et/ou les X représentant un alcoxy en C₁-C₆, de préférence méthoxy, éthoxy ou propoxy.

5. Composition bicomposante selon l'une quelconque des revendications 1 à 4, dans laquelle le siloxane contenant des groupes alcoxy est contenu en une quantité de 0,1 à 20 % en poids, de préférence de 0,1 à 10 % en poids, dans le composant A).

6. Composition bicomposante selon l'une quelconque des revendications 1 à 5, dans laquelle le polydiorganosiloxane réticulable comprend des groupes hydroxy ou des groupes hydroxy masqués, de préférence des groupes alcoxy ou acétoxy, qui sont reliés à un atome Si et sont de préférence agencés en position terminale, le polydiorganosiloxane étant de préférence un polydiméthylsiloxane linéaire.

7. Composition bicomposante selon l'une quelconque des revendications 1 à 6, dans laquelle le polydiorganosiloxane est un polydiorganosiloxane linéaire, de préférence un polydiorganosiloxane de formule (I) 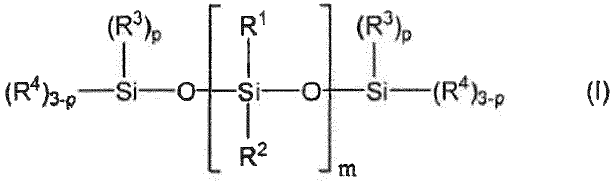 dans laquelle les radicaux R¹, R² et R³ représentent indépendamment les uns des autres des radicaux hydrocarbonés monovalents linéaires ou ramifiés, de 1 à 12 atomes C, qui comprennent éventuellement un ou plusieurs hétéroatomes, et éventuellement une ou plusieurs liaisons C-C multiples et/ou éventuellement des fractions cycloaliphatiques et/ou aromatiques ;
les R⁴ sont indépendamment les uns des autres un groupe hydroxy ou un groupe hydroxy bloqué, de préférence un groupe alcoxy ou un groupe acétoxy, R⁴ étant de préférence un groupe alcoxy ;
l'indice p représente une valeur de 0, 1 ou 2 ; et l'indice m est choisi de telle sorte que le polydiorganosiloxane présente à une température de 23 °C une viscosité de 10 à 500 000 mPa.s.

8. Composition bicomposante selon l'une quelconque des revendications 1 à 7, dans laquelle le polydiorganosiloxane est un polydiorganosiloxane à terminaison OH, à terminaison alcoxy ou à terminaison acétoxy, notamment un polydiméthylsiloxane à terminaison alcoxy, qui présente de préférence à une température de 23 °C une viscosité de 10 à 500 000 mPa.s, notamment de 5 000 à 400 000 mPa.s.

9. Composition bicomposante selon l'une quelconque des revendications 1 à 8, dans laquelle le composant B) contient au moins 15 % en poids, de préférence au moins 20 % en poids, d'eau.

10. Composition bicomposante selon l'une quelconque des revendications 1 à 9, dans laquelle le composant B) est une dispersion aqueuse.

11. Composition bicomposante selon l'une quelconque des revendications 1 à 10, dans laquelle le composant B) comprend au moins un additif choisi parmi un émulsifiant, un épaississant, une charge et au moins un matériau support choisi parmi un polydiorganosiloxane et un plastifiant, le composant B) comprenant de préférence au moins un émulsifiant, au moins un épaississant, au moins une charge et au moins un matériau support choisi parmi un polydiorganosiloxane et un plastifiant.

12. Procédé de collage ou de jointoyage de substrats avec une composition bicomposante selon l'une quelconque des revendications 1 à 11, comprenant :
a) l'incorporation du composant B) dans le composant A), afin d'obtenir un mélange,
b) l'application du mélange sur un substrat et la mise en contact du mélange appliqué sur le substrat avec un autre substrat, afin d'obtenir une liaison par collage entre les substrats, ou
l'introduction du mélange dans un joint entre deux substrats, afin d'obtenir un jointoyage entre les substrats, et
c) le durcissement du mélange,
l'incorporation selon l'étape a) étant réalisée avant ou pendant l'application ou l'introduction selon l'étape b).

13. Procédé de collage ou de jointoyage de substrats selon la revendication 12, dans lequel les substrats à coller ou à jointoyer sont en des matériaux identiques ou différents, le matériau étant de préférence choisi parmi le verre, le métal, le béton, le mortier, une pierre de construction, l'asphalte, le bitume, un plastique ou un matériau composite.

14. Utilisation d'une composition bicomposante selon l'une quelconque des revendications 1 à 11 en tant qu'adhésif ou agent d'étanchéité, notamment dans les domaines de la construction, des équipements sanitaires, de l'automobile, de la technologie solaire, de la technologie éolienne, de l'électroménager, de la construction de façades et de fenêtres, de l'électronique et de la construction de bateaux et de navires.
